Europäisches Patentamt

European Patent Office

Office européen des brevets

(19)

(11) Numéro de publication: **0 034 994**
**B2**

(12) **NOUVEAU FASCICULE DE BREVET EUROPEEN**

(45) Date de publication du nouveau fascicule du brevet: **24.10.90**

(51) Int. Cl.⁵: **C 21 C 7/00,** B 65 B 9/00, C 22 B 9/10

(21) Numéro de dépôt: **81420023.4**

(22) Date de dépôt: **25.02.81**

(54) **Produit composite à enveloppe tubulaire et âme en matière pulvérulente compactée et son procédé de fabrication.**

(30) Priorité: **26.02.80 FR 8004194**

(43) Date de publication de la demande:
**02.09.81 Bulletin 81/35**

(45) Mention de la délivrance du brevet:
**29.05.85 Bulletin 85/22**

(45) Mention de la decision concernant l'opposition:
**24.10.90 Bulletin 90/43**

(84) Etats contractants désignés:
**AT BE DE FR GB IT LU NL SE**

(56) Documents cités:
BE-A- 657 027       SE-A- 312 388
CA-A- 849 687       US-A-1 558 761
DE-A-2 359 738      US-A-2 500 380
FR-A-1 470 593      US-A-3 474 518
FR-A-2 269 581      US-A-3 915 693
FR-A-2 402 000      US-A-4 134 196
GB-A-2 003 509

Le dossier contient des informations techniques présentées postérieurement au dépôt de la demande et ne figurant pas dans le présent fascicule.

(73) Titulaire: **VALLOUREC Société Anonyme dite.**
**7, place du Chancelier Adenauer**
**F-75116 Paris (FR)**

(72) Inventeur: **Douchy, Michel**
**Route de Solesmes**
**Vertain F-59730 Solesmes (FR)**
Inventeur: **Tranchant, Jean-Louis**
**106, avenue Dampierre**
**F-59300 Valenciennes (FR)**
Inventeur: **Jehan, Michel**
**L'Illaz Le Villard du Planay**
**F-73350 Bozel (FR)**

(74) Mandataire: **Laredo, Jack Joseph**
**Elkington and Fife Beacon House 113 Kingsway**
**London, WC2B 6PP (GB)**

(56) References cited:
**Beratungsstelle für Stahlverwendung**
**"Merkblatt 174", 5. Auflage, 1971**

EP 0 034 994 B2

Courier Press, Leamington Spa, England.

## Description

L'invention concerne de la façon la plus générale, un produit composite à enveloppe tubulaire, comportant une enveloppe métallique et une âme en une matière pulvérulente ou granulaire qui adhère à l'enveloppe, apte à être facilement enroulé puis déroulé et dressé.

L'invention concerne également le procédé de fabrication de ce produit composite.

Enfin, l'invention concerne aussi un procédé de traitement de bains métalliques fondus au moyen de ce produit composite.

L'introduction dans des bain métalliques fondus de substances destinées les affiner, les désoxyder, les dégazer, les calmer et/ou modifier leur composition, est de pratique courante en métallurgie.

De nombreux procédés ou dispositifs ont été mis au point pour améliorer le rendement d'introduction de ces substances et aussi l'efficacité et la reproductibilité des résultats.

C'est ainsi que le brevet US 2.705.196 décrit l'addition, dans de l'acier ou de la fonte liquide, d'aluminium, de silicium, de silicocalcium ou d'autres matières comme désoxydants. Afin d'éviter l'oxydation à la surface du bain de ces additifs, ceuxci sont enveloppés dans une enveloppe qui peut être par exemple en acier doux et qui est immergée dans le bain par toute méthode convenable.

Le FR 2.269.581 décrit par ailleurs une méthode d'introduction d'un fil d'aluminium ou d'un autre métal ou alliage réducteur dans de l'acier liquide pour le désoxyder ou le calmer dans le cas d'une installation de coulée continue. Pour éviter l'oxydation superficielle du fil, celui-ci est revêtu d'une enveloppe mince en acier qui le protège de l'oxydation avant pénétration dans le bain métallique. Ceci permet d'effectuer en continu la désoxydation de l'acier par introduction du fil d'aluminium revêtu de son enveloppe à vitesse convenable, directement dans le moule de coulée continue pendant toute la durée de cette coulée.

Le gainage du fil de métal réducteur est réalisé de façon très simple en l'enveloppant dans un ruban métallique mince que l'on plaque sur le fil en faisant passer l'ensemble à travers des filières de diamètre décroissant, le ruban est ainsi enroulé autour du fil avec recouvrement et étirage, le fil jouant le rôle de mandrin. On obtient ainsi un produit composite de section circulaire qui peut être enroulé en bobine et qui, au moment de l'utilisation, sera déroulé grâce à un dispositif de déroulage et d'entraînement convenable, qui permettre de l'introduire à la vitesse voulue dans le bain métallique à traiter.

Le brevet FR 2.402.000 décrit un appareil perméttant d'introduire dans de l'acier liquide une bande continue d'aluminium.

Cette bande laminée à froid a une largeur égale à environ deux fois l'épasseiur et présente des bords arrondis. Elle est déroulée à partir d'une bobine et dressée avant introduction dans l'acier liquide.

L'appareil peut être aussi utilisé pour introduire dans le métal liquide des produits pulvérulents enfermés dans un tube de même section que la bande.

Enfin, le brevet US 3.915.693 décrit un produit composite qui comporte une envelopper métallique et une âme constituée par une matière granulaire, qui est utilisé en particulier pour des traitements de désoxydation, d'affinage du grain, ou autres, dans la coulée continue de métaux tels que l'aluminium ou l'acier.

Le produit est réalisé soit par remplissage d'un tube préexistant par la matière granulaire, soit en enfermant la matière granulaire dans une enveloppe métallique formée en continu à partir d'une bande. Dans les deux cas, on effectue, sur le tube rempli, une réduction progressive de diamètre par différentes méthodes telles que la laminage, le martelage ou l'étirage, qui permettent d'augmenter la longueur du tube tout en diminuant son diamètre et son épaisseur. Le produit composite obtenu est toujours de section circulaire.

C'est ainsi, par exemple, que ce brevet décrit un tube rempli de matière granulaire dont le diamètre extérieur est de 1 inch (25,4 mm) qui est réduit jusqu'à un diamètre final de 3/8 inch (9,5 mm).

Au cours de l'opération de réduction, la longueur de ce tube est portée de 246 feet (environ 75 m) à 1755 feet (environ 535 m) soit un rapport d'allongement d'environ 7,1. On voit que, dans ces conditions, l'épaisseur initiale de la paroi du tube est divisée par environ 2,7.

Les essais effectués en vue d'appliquer l'enseignement de ces brevets à la réalisation de produits composites tubulaires comportant une âme en une matière pulvérulente ou granulaire et une enveloppe réalisée à partir d'une bande ou d'un ruban métallique, ont montré qu'il est difficile d'effectuer une réduction par étirage après fermeture de l'enveloppe. En effet, en l'absence d'une âme ductile pouvant servir d'appui à cette enveloppe et se déformer en même temps qu'elle, cette enveloppe tend à s'allonger irrégulièrement et à se rompre, et aussi à pendre une forme extérieure difficilement contrôlable.

Par ailleurs, des essais ont montré qu'il est difficile de conserver la qualité d'un produit composite comportant une enveloppe mince en acier de section circulaire et une âme en une matière pulvérulente, en ce qui concerne en particulier la forme de cette enveloppe et la cohésion de l'âme, au cours de sa mise en oeuvre qui comporte un enroulage sur un tambour ou bobine, puis un déroulage suivi d'un dressage.

On a constaté aussi qui, si on ne réalise pas un compactage de la matière pulvérulente à l'intérieur de l'enveloppe, cette matière n'adhère pas et tend à se déplacer à l'intérieur de cette enveloppe au cours des manipulations, et donc à se répartir de façon hétérogène, ce qui perturbe l'utilisation.

On a donc recherché les moyens de résoudre ces difficultés, c'est-à-dire de réaliser un produit composite à enveloppe tubulaire comportant une âme pulvérulente on granulaire poreuse qui adhère à l'enveloppe et reste cohérente malgré les manipulations, ce produit étant apte à l'enroulage sur bobine ou tambour et au déroulage.

L'objet de l'invention est un produit composite à enveloppe tubulaire qui comporte une enveloppe métallique, fermée par agrafage et éventuellement sertissage parallèlement à son axe, à l'intérieur de laquelle est logée une matière pulvérulente ou granulaire compactée par compactage à périmètre constant sans allongement notable dans le sens de la longueur.

La section de ce produit comporte au moins deux zones aplaties parallèles disposées en face l'une de l'autre.

Cette section peut par exemple être carrée ou rectangulaire ou encore avoir la forme d'un ovale aplati. Des résultats particulierement favorables sont obtenus dans le cas de sections dont le rapport entre le plus grand axe et le plus petit axe, ce dernier mesurant la distance entre deux zones aplaties parallèles disposées en face l'une de l'autre, est de au moins 1,1.

Un autre objet de l'invention est un procédé de réalisation de ce produit composite à enveloppe tubulaire.

Suivant ce procédé, on part d'une enveloppe tubulaire de section sensiblement circulaire, fermée dans le sens long par agrafage le lone d'une genératrice à l'intérieur de laquelle a été logée, par une méthode quelconque, une matière pulvérulente ou granulaire non tassée.

On fait subir à ce produit de départ une déformation de sa section, à périmètre sensiblement constant et sans allongement notable dans le sens de la longueur de façon àcompacter la matière pulvérulente ou granulaire sans déplacement notable par rapport à l'enveloppe. De plus cette déformation est effectuée de façon à obtenir deux zones aplaties parallèles en face l'une de l'autre.

De préférence, on réalise le produit suivant l'invention de la façon suivante:

a) prolifage d'une bande métallique pour lui donner une forme de gouttière,

b) introduction à l'intérieur de cette gouttière d'une quantité déterminée de matière pulvérulente ou granulaire,

c) profilage des deux bords de cette gouttière puis rapprochement de ces deux bords l'un contre l'autre en enfermant la matière pulvérulente ou granulaire introduite,

d) agrafage des deux bords l'un à l'autre, puis éventuellement sertissage, de façon à constituer un produit composite de section sensiblement circulaire,

e) déformation de la section du produit composite à périmètre sensiblement constant et sans allongement notable, de façon à compacter la matière pulvérulente et à obtenir au moins deux zones aplaties, parallèles, en face l'une de l'autre.

Ainsi, le compactage de la matière pulvérulente réalisé en "e" ci-dessus s'effectue par simple diminution de section sans allongement en sans modifier l'épaisseur de l'enveloppe, en laissant la matière constituant l'âme à l'état poreux. Ceci évite un durcissement de l'enveloppe métallique du produit composite, et facilite l'utilisation ultérieure du produit fini.

La description détaillée ainsi que l'exemple non limitatif qui suivent, permettent, avec l'aide des figures annexées dont la liste est donnée ci-après, de bien comprendre l'invention.

La figure 1 illustre d'une manière générale une chaîne de formage mettant en oeuvre le procédé de l'invention.

Les figures 1a à 1f illustrent la forme du profil en différents points de la figure 1.

La figur 2 illustre une variante de la chaîne de formage selon l'invention.

Les figures 3 à 5 illustrent différentes formes de produits composites à enveloppe tubulaire fabriqués selon l'invention.

La figure 6 illustre comment l'on peut stocker le produit composite à enveloppe tubulaire suivant l'invention, enroulé sur un tambour ou une bobine.

Bien que l'invention puisse s'appliquer de manière générale, la description détaillée ci-après concerne plus spécialement l'affinage, la désoxydation, le dégazage, le calmage de bains métalliques fondus, et/ou la modification ou l'adustment de la composition au moyen d'un produit composite dont l'enveloppe est une bande d'un métal compatible avec le bain, tel que: un acier, de l'aluminium, du cuivre, ou un autre métal ou alliage. L'âme est constituée par la matière de traitement pulvérulente ou granulaire.

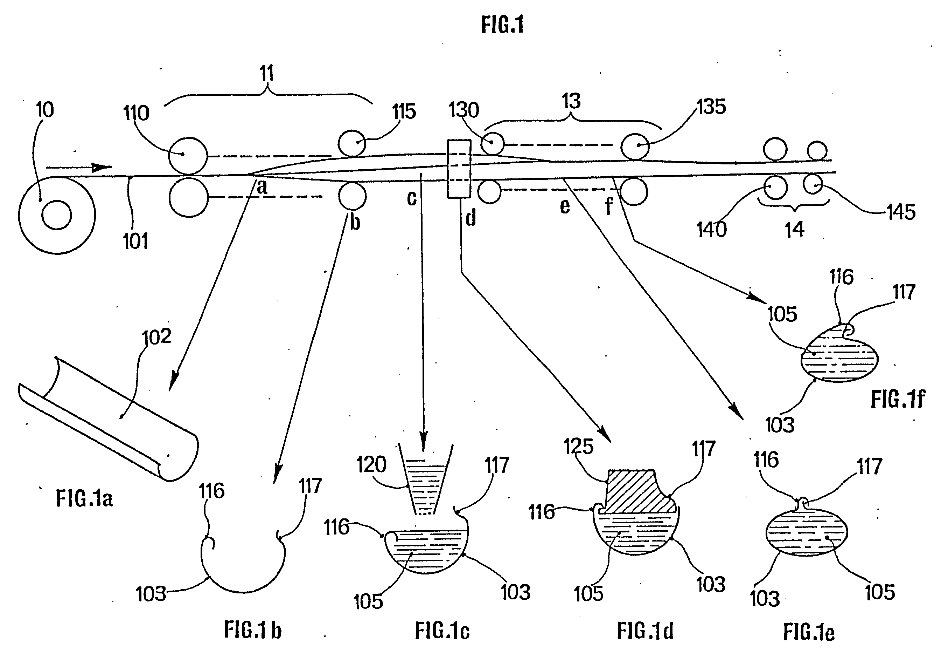

Sur la figure 1, un rouleau (10) délivre, suivant la flèche, une bande métallique (101) en acier par exemple, à une chaîne de formage en continu à froid, commençant par une première série (11) de galets de formage tels que (110) à (115). Au point a (figure 1a), on commence à déformer la bande en lui donnant un profil creux (102). Au point b (derniers galets 115 et figure 1b), la bande a reçu une section droite demi-fermée en forme de gouttière, ses deux bords (116) et (117) étant convenablement conformés pour pourvoir ultérieurement s'attacher l'un à l'autre. Au point c (figure 1c), une buse distributrice (120) remplit au passage la gouttière (103) par la matière pulvérulente de traitement (105). Ce remplissage peut être en lui-même quantifié, en règlant le débit de matière pulvérulente (pression appliquée par exemple). De préférence, on ajuste ensuite le dosage de la matière pulvérulente, par exemple en égalisant son niveau au moyen d'un râcleur (125, figure 1d). Avantageusement, celui-ci réalise aussi un essuyage des bords (116) et (117), côté interne.

Ensuite, la chaîne de formage comporte une seconde série (13) de galets de formage, tels que (130) à (135). Ceux-ci ramènent les bords (116) et (117) l'un vers l'autre, les agrafent l'un à l'autre au point e (figure 1e), puis de préférence, sertissent la liaison ainsi formée en écrasant le joint des deux bords (figure 1f).

Ensuite, la chaîne de formage est complétée par une troisième série (14) de galets, tels que (140) à (145) qui déforment l'enveloppe, sans allongement axial notable, et entraînent une diminution de section à périmètre constant en conférant au produit une section présentant au moins deux zones aplaties parallèles en face l'une de l'autre. De préférence, la réduction de section effectuée est de l'ordre de 15% au moins.

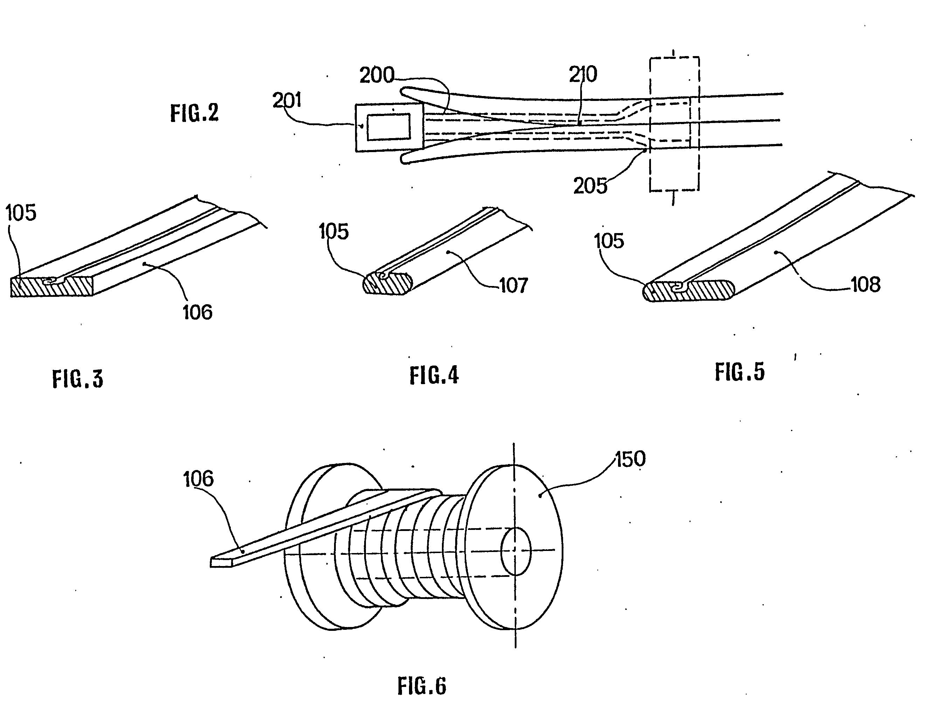

On réalise ainsi un compactage de la matière pulvérulente sur place, qui lui donne une bonne cohésion ainsi qu'un excellent maintien à l'intérieur de l'enveloppe qui l'enserre. On obtient ainsi une compresssion limitée de la matière pulvérulente ou granulaire qui demeure poreuse. La gouttière refermée (figure 1f) étant sensiblement circulaire, on obtient aisément selon l'invention, un profil aplati proche d'un rectangle (106, figure 3), d'un ovale aplati (107, figure 4) ou encore d'un rectangle à petits côtés hémicirculaires (108, figure 5). Le joint serti se trouve finalement rabattu de préférence comme le montrent les figures 3 à 5, sur un grand côté de rectangle ou de l'ovale au niveau de l'une des deux zones aplaties.

Le produit composite à enveloppe tubulaire ainsi obtenu peut être aisément enroulé sur un tambour (150) comme on le voit sur la figure 6, dans le cas d'un produit de section quasi rectangulaire, par un système de guidage par exemple du type à came en coeur ou encore par tout autre moyen qui assure un trancanage convenable.

Dans certains cas, notamment pour les épaisseurs importantes de l'enveloppe, l'introduction et le dosage de la matière pulvérulente pourront être effectués comme illustré sur la figure 2; un mandrin creux (200) est supporté par une barre (201) également creuse, pour s'introduire dans la gouttière avant sa fermeture, réalisée en (210) par des rouleaux non représentés. La matière pulvérulente ou granulaire est poussée à l'intérieur de la barre porte-mandrin (201) et du mandrin creux (200) pour s'introduire dans la gouttière au niveau de la tête du mandrin (205). Elargie à la forme convenable, celle-ci sert en même temps d'appui pour assurer le sertissage des bords (116) et (117), comme cela est illustré sur la figure 1f. Ensuite, la matière est compactée conformément à l'invention à l'aide de la troisième série (14) de galets de formage (figure 1).

Bien entendu, le remplissage peut s'effectuer en variante par d'autres moyens d'injection avec ou sans pression de gaz, suivant les caractéristiques de la matière pulvérulente ou granulaire et la forme géométrique de l'enveloppe.

Le traitement de bains métalliques fondus s'effectue comme suit: on connaît la quantité de produit nécessaire; le tambour (150) est amené au dessus du bain, et l'on déroule dans celui-ci en un temps bref la longueur convenable du produit composite suivant l'invention, coupée par des moyens adéquats à la fin du processus. Ce moyend convient particulièrement bien pour les poches d'acier ou les répartiteurs de coulée continue.

L'enveloppe métallique est généralement produite à partir d'une bande pliée et sertie, constituée du même métal de base que le métal liquide. Cette enveloppe est donc en ce sens non réactive à l'égard du bain métallique.

L'enveloppe peut également être utilisée comme métal d'appord proprement dit, par exemple une enveloppe d'aluminium pour introduction dans un bain d'acier.

La matière pulvérulente ou granulaire qui constitue l'âme peut être à base de métaux ou alliages, de laitiers ou d'un mélange de ces produits. Cette matière peut notamment comprendre des substances réactives pour affiner, désoxyder, dégazer ou calmer le bain métallique fondu, ou pour modifier la nature des inclusions, ou encore pour jouer le rôle d'adjuvants. On peut citer en particulier:

des réducteurs tels que le calcium, le magnésium, le sodium, le bore, le titane, le zirconium, les terres-rare, ou encore d'autres éléments ou composés réducteurs,

des éléments adjuvants destinés à modifier les propriétés du métal, ou encore des éléments d'addition divers tels que le plomb, le bismuth, le sélénium, le tellure, ou le soufre,

des éléments d'addition destinés à adjuster la composition du bain métallique avec précision analytique accrue tels que C, Si, Mn, Ni, Cr, Mo,

tous alliages contenant les éléments ci-dessus associés à dex métaux de base comme le fer, le silicium, l'aluminium, le cuivre, notamment.

La matière peut également comporter en tout ou en partie, des laitiers en poudre, dont la composition correspond à celle des laitiers généralement utilisés dans les réactions métallurgiques d'élaboration ou d'affinage du métal liquide traité, tels qu'un mélange du chrome, d'alumine et de spath fluor.

L'exemple non limitatif ci-après décrit un mode de réalisation de l'invention.

Exemple 1

On a réalisé par le procédé ci-dessus un produit composite à enveloppe tubulaire à partir d'une bande en acier de 0,4 mm d'épaisseur et 36,4 mm de large. Après l'avoir formée en une gouttière on a introduit à l'intérieur une matière pulvérulente à base de Si Ca à 30% de Ca. On a ensuite roulé, agrafé, et serti la bande de façon à obtenir un tube de 10 mm de diamètre extérieur rempli de matière pulvérulente.

Ce tube a alors été écrasé de façon à obtenir une section droite pratiquement rectangulaire à angles arrondis et mesurant 11 × 6 mm. Cette déformation finale a été effectuée à froid, sans allongement notable et a entraîné une réduction de la section intérieure d'environ 16%. Il en est résulté un compactage efficace de la matière pulvérulente et aussi un serrage de l'enveloppe sur cette matière compactée qui garantit le maintient en place de la matière pulvérulente ou granulaire au cours des manipulations ultérieures.

Le produit composite a été enroulé par trancanage sur une bobine de 600 mm de diamètre. On a obtenu ainsi une densité de remplissage de la bobine 20 à 25% supérieure à ce qu'elle serait avec un produit rond.

On a constaté l'excellente tenue mécanique du produit composite au cours de cet enroulage ainsi qu'au cours du déroulage ultérieur lors de l'utilisation. Le produit composite pénètre bien au coeur d'un bain d'acier en fusion. Restant à la fois poreuse et comprimée, la matière pulvérulente ou granulaire réagit avec l'acier liquide dans des conditions optimales d'efficacité et de rendement.

**Revendications**

1. Produit composite pour traitement de bains métalliques à enveloppe tubulaire de grande longueur apte à être enroulé puis déroulé et dressé, comportant une enveloppe métallique (103) et une âme (105) en une matière pulvérulente ou granulaire, l'enveloppe étant fermée dans le sens long, cette fermeture étant réalisée par agrafage le long d'une génératrice, la matière pulvérulente ou granulaire étant compactée à l'intérieur de l'enveloppe par compactage à périmètre constant sans allongement notable dans le sens de la longueur et la section du produit présentant au moins deux zones aplaties parallèles en face l'une de l'autre (106—107—108).

2. Produit composite suivant revendication 1, caractérisé en ce que la fermeture est sertie.

3. Produit composite suivant revendications 1 ou 2, caractérisé en ce que le joint serti est rabattu sur le profil de préférence sur l'une des deux zones aplaties de l'enveloppe.

4. Produit suivant revendications 1, 2 ou 3, caractérisé en ce que sa section est sensiblement rectangulaire (106—108).

5. Produit suivant revendications 1, 2 ou 3, caractérisé en ce que sa section est un ovale aplati (107).

6. Produit suivant l'une des revendications 1, 2, 3, 4 ou 5, caractérisé en ce que dans le plan de sa section le rapport entre le plus grande axe et le plus petit axe est de au moins 1,1.

7. Produit suivant l'une des revendications 1 à 6, caractérisé en ce que son enveloppe est en un métal ferreux.

8. Produit suivant l'une des revendications 1 à 6, caractérisé en ce que son enveloppe est en un métal non ferreux.

9. Produit suivant l'une des revendications 1 à 8, caractérisé en ce que son âme est une matière pulvérulente ou granulaire compactée à base de métaux purs et/ou alliages et/ou laitiers.

10. Produit suivant l'une des revendications 1 à 9, caractérisé en ce que la matière pulvérulente ou granulaire contient un ou plusieurs éléments réactifs tels que Ca, Mg, Na, B, Ti, Zr et/ou des métaux des terres-rares et/ou d'autres éléments d'addition tels que Pb, Bi, Se, Te, S, C, Si, Mn, Ni, Cr, Mo.

11. Produit suivant l'une des revendications 10, caractérisé en ce qu'il contient en plus, au moins un alliage à base d'un métal du groupe comprenant Fe, Si, Al, Cu.

12. Procédé de fabrication d'un produit composite pour traitement de bains métalliques à enveloppe tubulaire de grande longueur apte à êtu insulée, puis déroulée et dressée, et dans lequel on prépare par un procédé continu à partir d'une bande métallique, une enveloppe tubulaire de section sensiblement circulaire, à l'intérieur de laquelle on loge une matière pulvérulente ou granulaire non tassée, caractérisé en ce que l'enveloppe est fermé dans le sens long par agrafage le long d'une genératrice, en ce que l'on fait subir à ce produit une déformation de sa section à périmètre sensiblement constant et sans allongement notable dans le sens de la longueur, de façon à compacter la matière pulvérulente ou granulaire qui constitue l'âme, sans déplacement notable par rapport à l'enveloppe, et en ce que cette déformation est effectuée de façon à obtenir deux zones aplaties parallèles en face l'une de l'autre.

13. Procédé suivant revendication 12, caractérisé en ce que la prèparation de l'enveloppe tubulaire comporte les étapes suivantes:

a) on profile une bande métallique pour lui donner une forme de gouttière,

b) on introduit dans cette gouttière une quantité déterminée de matière pulvérulente ou granulaire,

c) on rapproche les deux bords de la bande, qui ont été préalablement profilés pour être agrafables l'un contre l'autre en enfermant la matière introduite, et

d) on agrafe les deux bords l'un à l'autre.

14. Procédé suivant revendication 13, caractérisé en ce qu'après remplissage de la gouttière par la matière pulvérulente ou granulaire, le niveau de celle-ci est égalisé au moyen d'un râcleur.

15. Procédé suivant l'une des revendications 13 ou 14, caractérisé en ce qu'après agrafage des deux bords on effectue un sertissage.

16. Procédé suivant l'une des revendications 12 à 15, caractérisé en ce que la déformation du produit effectuée à partir d'une section initiale sensiblement circulaire entraîne une diminution de section d'environ 15% ou davantage.

**Patentansprüche**

1. Zusammengesetztes Produkt zur Behandlung von Metallbändern
mit einer rohrförmigen Hülle großer Länge, die zusammengewickelt, dann auseinandergewickelt und zugerichtet werden kann, und
mit einer metallischen Hülle (103) und einem Kern (105) aus pulver- oder granulatförmigem Material,
wobei die Hülle in Längsrichtung geschlossen ist,
wobei der Verschluß durch Umbördeln längs einer Mantellinie hegestellt ist,
wobei das pulver- oder granulatförmige Material innerhalb der Hülle durch Verdichtung bei konsantem Umfang ohne merkliche Dehnung in Längsrichtung verdichtet ist und
wobei der Querschnitt des Produkts wenigstens zwei abgeflachte, parallele und einander zugewandte Zonen (106, 107, 108) aufweist.

2. Zusammengesetztes Produkt nach Anspruch 1, dadurch gekennzeichnet, daß der Verschluß gefalzt ist.

3. Zusammengesetztes Produkt nach Anspruch 1 oder 2, dadurch gekennzeichnet, daß die gefalzte Verbindung auf das Profil, vorzugsweise auf eine der beiden abgeflachten Zonen der Hülle, umgeschlagen ist.

4. Produkt nach Anspruch 1, 2 oder 3, dadurch gekennzeichnet, daß sein Querschnitt (106, 108) im wesentlichen rechteckig ist.

5. Produkt nach Anspruch 1, 2 oder 3, dadurch gekennzeichnet, daß sein Querschnitt ein abgeflachtes Oval (107) ist.

6. Produkt nach Anspruch 1, 2, 3, 4 oder 5, dadurch gekennzeichnet, daß in der Ebene seines Querschnitts das Verhältnis zwischen der größten Achse und der kleinsten Achse wenigstens 1,1 beträgt.

7. Produkt nach einem der Ansprüche 1 bis 6, dadurch gekennzeichnet, daß seine Hülle aus einem eisenhaltigen Metall besteht.

8. Produkt nach einem der Ansprüche 1 bis 6, dadurch gekennzeichnet, daß seine Hülle aus einem Nichteisenmetall besteht.

9. Produkt nach einem der Ansprüche 1 bis 8, dadurch gekennzeichnet, daß sein Kern aus einem verdichteten pulver- oder granulatförmigen Material auf der Basis von reinen Metallen und/oder Legierungen und/oder Schlacken besteht.

10. Produkt nach einem der Ansprüche 1 bis 9, dadurch gekennzeichnet, daß das pulver- oder granulatförmige Material folgendes enthält:

eines oder mehrere reaktive Elemente, wie Ca, Mg, Na, B, Ti, Zr, und/oder Metalle von seltenen Erden und/oder andere Zusatzelemente, wie Pb, Bi, Se, Te, S, C, Si, Mn, Ni, Cr, Mo.

11. Produkt nach Anspruch 10, dadurch gekennzeichnet, daß es außerdem wenigstens eine Legierung auf der Basis eines Metalls der Fe, Si, Al, Cu aufweisenden Gruppe enthält.

12. Verfahren zur Herstellung eines zusammengesetzten Produkts zur behandlung von Metallbädern mit rohrförmiger Hülle großer Länge, die zusammengewickelt, dann auseinandergewickelt und zugerichtet werden kann, bei dem aus einem metallischen Band durch ein kontinuierliches Verfahren eine rohrförmige Hülle mit im wesentlichen kreisförmigem Querschnitt hergestellt wird, in der ein nicht verdichtetes pulver- oder granulatförmiges Material angeordnet wird, dadurch gekennzeichnet, daß die Hülle in Längsrichtung durch Umbördeln entlang einer Mantellinie verschlossen wird, daß dieses Produkt einer Verformung seines Querschnitts unterworfen wird bei im wesentlichen konstantem Umfang und ohne merckliche Dehnung in Längsrichtung derart, daß das den Kern bilkdende pulver- oder granulatförmige Material ohne merkliche Verschiebung gegenüber der Hülle verdichtet wird, und daß diese Verformung derart ausgeführt wird, daß zwei abgeflachte parallele und einander zugewandte Zonen erzielt werden.

13. Verfahren nach Anspruch 12, dadurch gekennzeichnet, daß die Herstellung der rohrförmigen Hülle die folgenden Schritte umfaßt:

(a) man profiliert ein metallisches Band, um ihm dabei die Form einer Rinne zu geben,

(b) man führt eine gegebene Menge an pulver- oder granulatförmigem Material in die Rinne ein,

(c) man nähert die beiden Ränder des Bands, die vorher profiliert wurden, um gegeneinander umgebördelt werden zu können, unter Einschluß des eingeführten Materials, und

(d) man bördelt die beiden Ränder aufeinander.

14. Verfahren nach Anspruch 13, dadurch gekennzeichnet, daß nach dem Füllen der Rinne mit dem pulver- oder granulatförmigen Material dessen Niveau mittels eines Abstreifers egalisiert wird.

15. Verfahren nach einem der Ansprüche 13 und 14, dadurch gekennzeichnet, daß nach dem Umbördeln der beiden Ränder ein Falzen erfolgt.

16. Verfahren nach einem der Ansprüche 12 bis 15, dadurch gekennzeichnet, daß die ausgehend von einem in wesentlichen kreisföromigen Anfangsquerschnitt erfolgte Verformung des Produkts eine Querschnittsverminderung von etwa 15% oder mehr nach sich zieht.

## Claims

1. A composite product for the treatment of metal baths having a tubular envelope of great length capable of being wound then unwound and straightened, comprising a metallic envelope (103) and a core (105) of a pulverulent or granular material, the envelope being closed along its length, this closure being effected by hooking along a generatrix of the envelope, the pulverulent or granular material being compacted within the envelope by compacting at constant perimeter without a significant extension in a longitudinal direction and the cross-section of the product having at least two parallel flattened portions facing each other (106—107—108).

2. A composite product according to Claim 1, characterized in that the closure is crimped.

3. A composite product according to Claim 1 or 2, charcterized in that the crimped joint is folded down on the profile, preferably on one of the two flattened portions of the envelope.

4. A product according to Claim 1, 2 or 3, characterized in that its cross-section is substantially rectangular (106—108).

5. A product according to Claim 1, 2 or 3, characterized in that its cross-section is a flattened oval (107).

6. A product according to one of Claims 1, 2, 3, 4 and 5 characterized in that, in the plane of its cross-section, the ratio of the larger axis to the smaller axis is at least 1.1.

7. A product according to one of Claims 1 to 6, characterized in that its envelope is composed of a ferrous metal.

8. A product according to one of Claims 1 to 6, characterized in that its envelope is composed of a non-ferrous metal.

9. A product according to one of Claims 1 to 8, characterized in that its core consists of a compacted pulverulent or granular material based on pure metals and/or alloys and/or fluxes.

10. A product according to one of Claims 1 to 9, characterized in that the pulverulent or granular material contains one or more reactive elements such as Ca, Mg, Na, B, Ti, Zr and/or rare earth metals and/or other addition elements such as Pb, Bi, Se, Te, S, C, Si, Mn, Ni, Cr or Mo.

11. A product according to Claim 10, characterized in that it contains in addition at least one alloy based on a metal of the group consisting of Fe, Si, Al and Cu.

12. A process for the production of a composite product for the treatment of metal baths having a tubular envelope of great length, capable of being wound, then unwound and straightened, and in which a tubular envelope of generally circular cross-section is prepared by a continuous process from a metallic strip, inside which envelope an uncompacted pulverulent or granular material is housed, characterized in that the envelope is closed along its length by hooking along a generatrix of the envelope, in that this product is subjected to a change in its cross-section at substantially constant perimeter and without a significant extension in a longitudinal direction, in such manner that the pulverulent or granular material which constitutes the core is compacted without significant displacement in relation to the envelope, and in that this shaping is carried out in such manner to produce two parallel flattened portions which face each other.

13. A process according to Claim 12, characterized in that the preparation of the tubular envelope comprises the following steps:

a) shaping a metal strip in channel form;

b) introducing in to this channel a predetermined quantity of pulverulent or granular material;

c) bringing together the two edges of the strip which have previously been shaped for hooking together, enclosing the introduced material; and

d) hooking together the two edges.

14. A process according to Claim 13, characterized in that, after the channel has been filled with the pulverulent or granular material, the level of the material is evened out by means of a scraper.

15. A process according to one of Claims 13 and 14, characterized in that crimping is carried out after the two edges have been hooked together.

16. A process according to one of Claims 12 to 15, characterized in that the shaping of the product starting from a generally circular initial cross-section, causes a reduction in cross-section of substantially 15% or more.

FIG.1

FIG.1a

FIG.1b

FIG.1c

FIG.1d

FIG.1e

FIG.1f

FIG.2

200
201
210
205

FIG.3

105
106

FIG.4

105
107

FIG.5

105
108

FIG.6

106
150

EP 0 034 994 B2